# EUROPEAN PATENT APPLICATION

(11) **EP 2 275 899 A2**
(43) Date of publication of application: **19.01.2011**
(21) Application number: 10157637.9
(22) Date of filing: 24.03.2010
(51) Int. Cl.: G06F 1/16

(54) **Apparatus and method for electronic device control**

(30) Priority: 15.07.2009 KR 20090064559
(71) Applicant: SAMSUNG ELECTRONICS CO., LTD., Suwon-si Gyeonggi-do 442-742 (KR)
(72) Inventor: Cho, Cheon-yong, Gyeonggi-do (KR); Cho, Seung-kee, Gyeonggi-do (KR); Lee, In-ki, Gyeonggi-do (KR); Choi, Jin-wook, Gyeonggi-do (KR)
(74) Representative: Robinson, Ian Michael

(57) **Abstract**

Provided are a method and apparatus for controlling an electronic device having a removable stylus for operating a touch screen of the electronic device, and at least one button for operating the electronic device, the method including: determining whether the stylus is removed from the electronic device, and deactivating the at least one button if the stylus is removed from the electronic device.

## Description

### BACKGROUND OF THE INVENTION

### Field of the Invention

Apparatuses and methods consistent with the present invention relate to controlling electronic devices, and more particularly, to controlling buttons and a touch screen on an electronic device.

### Description of the Related Art

Electronic devices (also referred to as "device" herein) having a touch screen, whereby a user can input data and/or operate the device, have gained widespread popularity. Many such devices also include a stylus or pointing device which the user can use to operate the device via the touch screen. Such devices may or may not be portable. Personal data assistants ("PDAs") and mobile telephones are examples of such portable devices. On the other hand, it is also possible for a workstation, or some other non-portable device to employ such a touch screen and stylus.

In addition to having a touch screen, some devices may have other buttons which can also be used to operate the device. For example, an electronic book reader may have a touch screen which the reader can use to display pages of the electronic book. Such an electronic book reader may also have buttons which perform operations such as setting bookmarkers and/or turning the pages of the electronic book. Allowing a user to interact with the device using both a touch screen (and stylus) and other buttons increases the functionality and usability of the device, and thus, also adds to the convenience of the user.

However, a problem arises when a user attempts to use a stylus on a touch screen and her hand simultaneously touches one or more of the buttons. By so doing, the user can inadvertently press one or more buttons, and as a result, instruct the device to perform some task which was not intended. Additionally, another problem arises in that when using one or more buttons, a user may have no need to simultaneously use the touch screen.

Similarly, when using the touch screen and stylus, a user may have no need to simultaneously use the one or more buttons. Likewise, when using the buttons, the user may have no need to use the stylus and the touch screen. Thus, power may unnecessarily wasted by providing power to both the buttons and the touch screen at the same time, or similarly, processing capacity of the device could be diminished as a result of having to process input received from buttons being enabled unintentionally.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

Aspects of the present invention provide an apparatus and method for controlling an electronic device having a removable stylus for operating a touch screen of the electronic device, and at least one button for operating the electronic device, the method including: determining whether the stylus is removed from the electronic device; and deactivating the at least one button if the stylus is removed from the electronic device.

The method may further include: activating the touch screen if the stylus is removed from the electronic device. Similarly, the method may further include: deactivating the touch screen if the stylus is inserted into the electronic device. Likewise, the method may further include: activating the at least one button if the stylus is inserted into the electronic device.

The at least one button may be part of the touch screen. Alternatively, the at least one button may be separate from the touch screen.

The deactivating of the at least one button may be performed by switching off power to the at least one button. Alternatively, the deactivating of the at least one button may be performed by ignoring input from the at least one button.

Similarly, the deactivating of the touch screen and may be performed by switching off power to the touch screen, or the deactivating of the touch screen may be performed by ignoring input from the touch screen.

Another exemplary embodiment of the present invention provides a method for controlling an electronic device having an insertable stylus for operating a touch screen of the electronic device, and at least one button for operating the electronic device, the method including: determining whether the stylus is inserted into the electronic device; and enabling the at least one button if the stylus is inserted into the electronic device.

Another exemplary embodiment of the present invention provides an apparatus including: a removable stylus; a touch screen which is operable with the stylus; at least one button for operating the apparatus; and a controller which determines whether the stylus is removed from the apparatus and disables the at least one button if the stylus is removed from the apparatus.

The controller may enable the touch screen if the stylus is removed from the apparatus. Similarly, the controller may enable the touch screen if the stylus is inserted into the apparatus. Likewise, the controller may enable the at least one button if the stylus is inserted into the apparatus.

The at least one button may be part of the touch screen, or the at least one button may be separate from the touch screen.

The controller may disable the at least one button by switching off power to the at least one button, or the controller may disable the at least one button by ignoring input from the at least one button. Similarly, the controller may disable the touch screen by switching off power to the touch screen, or the controller may disable the touch screen by ignoring input from the touch screen.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 illustrates an example of a device according to an exemplary embodiment of the present invention;
FIG. 2 illustrates an example of an apparatus according to an exemplary embodiment of the present invention;
FIG. 3A illustrates an example of a method for controlling a device according to an exemplary embodiment of the present invention;
FIG. 3B illustrates an example of a method for controlling a device according to an exemplary embodiment of the present invention;
FIG. 4A illustrates an example of a method for controlling a device according to an exemplary embodiment of the present invention;
FIG. 4B illustrates an example of a method for controlling a device according to an exemplary embodiment of the present invention;
FIG. 5 illustrates an example of a method for controlling a device according to an exemplary embodiment of the present invention.

### DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

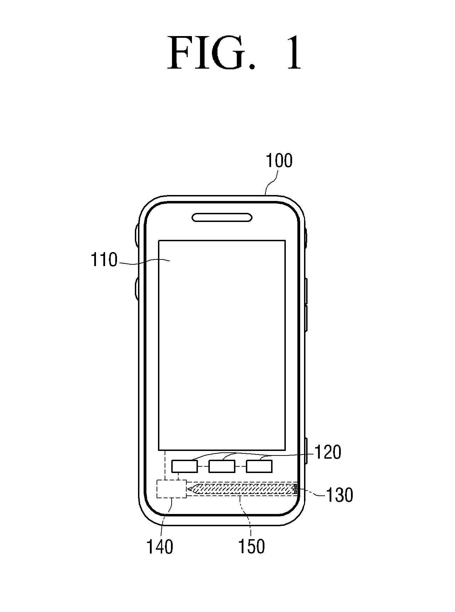

FIG. 1 illustrates an example of a device according to an exemplary embodiment of the present invention. As shown in FIG. 1, a device 100 having a touch screen 110, buttons 120 and a stylus 130. A user desiring to use the device can use the stylus 130 as a pointing device to operate the device 100 via the touch screen 110. Additionally, a user can operate the device using buttons 120. The buttons 120 may perform some or all of the same functions that a user might perform using the stylus 130 and touch screen 110, or the buttons 120 may perform different functions.

In the exemplary embodiment shown in FIG. 1, the buttons 120 are located externally with respect to the touch screen 110. However, it should be noted that the buttons 120 may be external to the touch screen 110, or internal, i.e., displayed as images on the touch screen.

Additionally, the stylus 130 can be stored in a stylus holder 150 when not in use. As shown in FIG. 1, the stylus holder 150 is located on the internal portion, i.e., within the device 100. However, the stylus holder 150 could also be located on the outside, i.e., an external portion of the device 100. Furthermore, as used herein, any description of the stylus 130 being inserted into (or removed from) "the device," includes the stylus 130 being inserted into (or removed from) the stylus holder 150.

The device may further include a controller 140 which has connections to the stylus holder 150, the buttons 120 and the touch screen 110. FIG. 1 shows the controller 140 and the stylus holder using dashed lines so as to indicate their presence on the inside of the device 100. However, as noted above with regard to the stylus holder 150, any of the component parts could conceivably be located either internally or externally, with respect to the device.

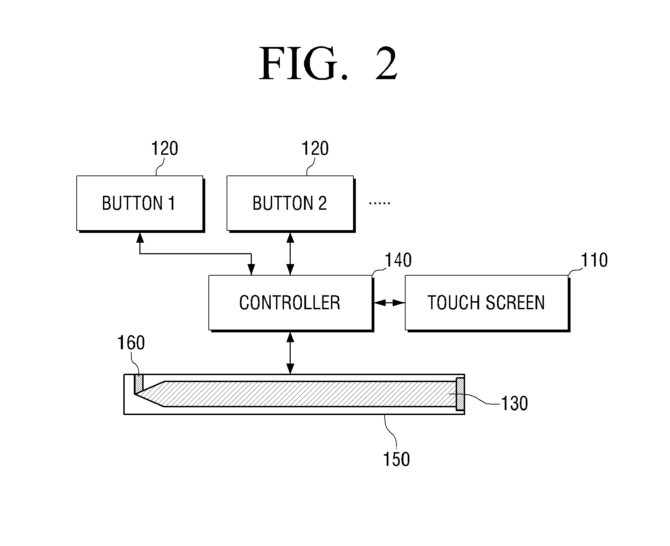

FIG. 2 shows a more detailed example of how the controller 140 can be interconnected to touch screen 110, the stylus holder 150 and the buttons 120. FIG. 2 also shows a more detailed view of a stylus holder 150. The stylus holder 150 may include a contact mechanism 160 whereby if the stylus 130 is inserted into the stylus holder 150 and is making contact with the contact mechanism 160, a signal can be sent to the controller 140 so that the controller 140 can determine whether the stylus 130 is inserted into or removed from the stylus holder 150. Of course, many different contact mechanisms/signaling schemes are possible so as to achieve the desired effect of representing a change of state if the stylus 130 is inserted into or removed from the stylus holder 150.

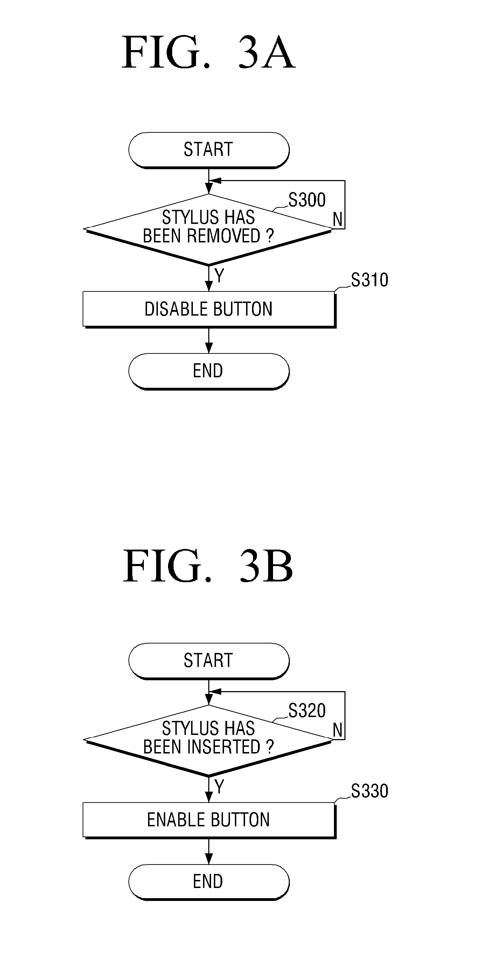

FIG. 3A shows a flowchart according to an exemplary embodiment of the present invention. In operation S300, the controller 140 determines whether the stylus 130 has been removed from the stylus holder 130. If the controller 140 determines the stylus 130 has been removed (S300-Y), the controller 140 can then, in operation S310, disable at least one button of the buttons 120. Otherwise, the operation could begin again (S300-N). Note that the controller 140 does not necessarily have to disable all of the buttons 120. Rather, the layout of the buttons 120 may be such that only a certain number of buttons, which is less than the total number of buttons 120, needs to be disabled to prevent unintended contact while the user uses the stylus 130 and the touch screen 110.

FIG. 3B shows a flowchart according to another exemplary embodiment of the present invention. In operation S320, the controller 140 determines whether the stylus 130 has been inserted into the stylus holder 130. If the controller 140 determines the stylus 130 has been removed (S320-Y), the controller 140 can then, in operation S330, enable at least one button of the buttons 120. Otherwise, the operation could begin again (S320-N). As noted as with respect to the example of FIG. 3A, the controller 140 does not necessarily have to enable all of the buttons 120.

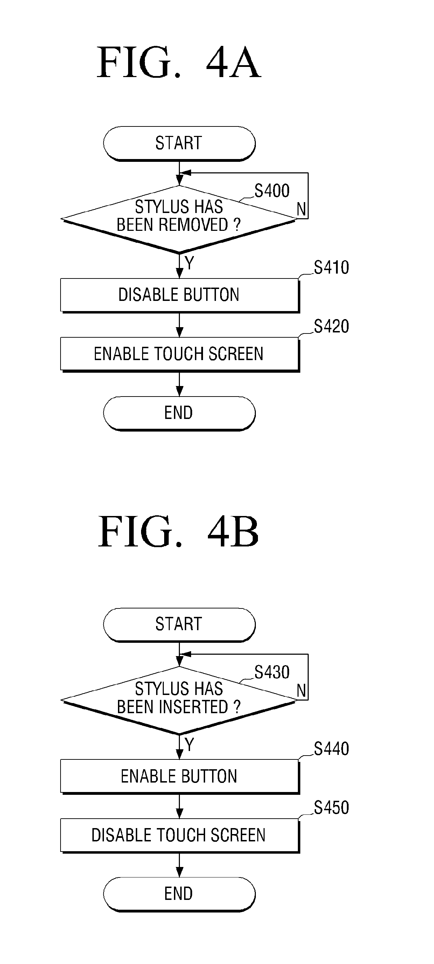

FIG. 4A shows another exemplary embodiment of the present invention whereby, in operation S400, the controller 140 determines whether the stylus 130 has been removed from the stylus holder 130. If the controller 140 determines the stylus 130 has been removed (S400-Y), the controller 140 can then, in operation S410, disable at least one button of the buttons 120. Otherwise, the operation could begin again (S400-N). Then, in operation S420, the controller 140 could enable the touch screen 110. While the flowchart of FIG. 4A shows the enabling of the touch screen 110 (S420) as occurring after the disabling of the buttons 120 (S410), the controller could perform both of these operations simultaneously, or in a reverse order.

Likewise, FIG. 4B shows another exemplary embodiment of the present invention whereby, in operation S430, the controller 140 determines whether the stylus 130 has been inserted into the stylus holder 130. If the controller 140 determines the stylus 130 has been inserted (S430-Y), the controller 140 can then, in operation S440, enable at least one button of the buttons 120. Otherwise, the operation could begin again (S430-N). Then, in operation S450, the controller 140 could disable the touch screen 110. While the flowchart of FIG. 4B shows the disabling of the touch screen 110 (S450) as occurring after the enabling of the buttons 120 (S440), the controller could perform both of these operations simultaneously, or in a reverse order.

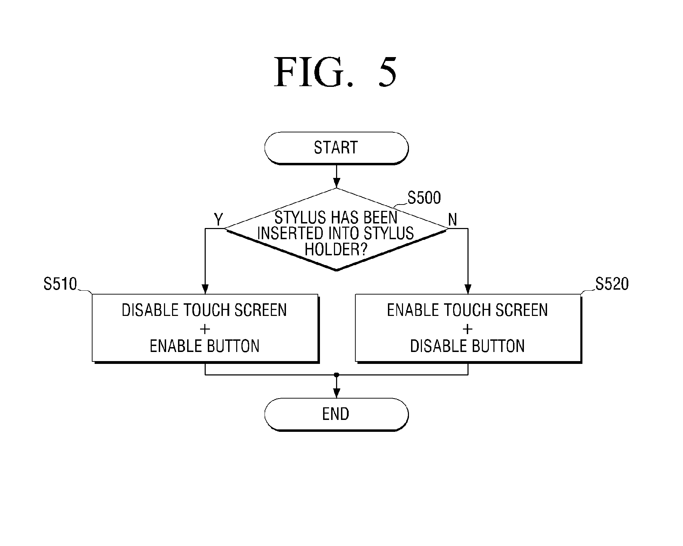

FIG. 5 shows yet another exemplary embodiment of the present invention whereby, in operation S500, the controller 140 determines whether the stylus 130 has been removed from the stylus holder 130. If the controller 140 determines the stylus 130 has been inserted (S510-Y), the controller 140 can then, in operation S440, disable the touch screen 110 and enable at least one button of the buttons 120. On the other hand, if the controller 140 determines the stylus 130 has not been inserted (S510-Y), the controller 140 can then, in operation S440, disable the touch screen 110 and enable at least one button of the buttons 120. For example, the device 100 could be turned on without the stylus 130 being inserted into the stylus holder 150. In such a case, the controller could determine (e.g., operation S500-N) that the touch screen 110 should be enabled and the at least one button of the buttons 120 should be disabled (S520).

It should be noted that while FIG. 5 shows each of the operations S510 and S520 as including two sub-operations (i.e., disable touch screen and enable button(s) (S510), and enable touch screen and disable button(s) (S520)), as noted above with regard to other exemplary embodiments, these sub-operations could be performed simultaneously, or one before the other.

Further, it should be noted that operation S500 could be changed so as to permit the controller to determine whether the stylus 130 is removed from the stylus holder 150 (not shown), in which case the resulting operations shown in FIG. 5 (i.e., operations S510 and S520) would have to be reversed accordingly.

Additionally, it should be noted that the buttons 120 can be disabled in different ways. For example, if the functioning of the buttons 120 depends on supplied electrical power, the supplied electrical power could be cut off (also referred to as "switching off" herein), effectively preventing the buttons from being able to function. Similarly, any signals received by the controller 140, resulting from a pressing of the buttons 120, could simply be ignored by the controller 140. On other hand, if the buttons 120 are images displayed on a screen, such as would be the case if the buttons 120 were actually displayed on a portion of the touch screen 110, the displaying of the images representing the buttons 120 could be suspended or otherwise rendered inactive to a user's touch.

The foregoing exemplary embodiments are merely exemplary and are not to be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

## Claims

1. A method for controlling an electronic device having a removable stylus for operating a touch screen of the electronic device, and at least one button for operating the electronic device, the method comprising:
determining whether the stylus is removed from the electronic device; and
deactivating the at least one button if the stylus is removed from the electronic device.

2. The method of claim 1 further comprising: activating the touch screen if the stylus is removed from the electronic device.

3. The method of claim 1, further comprising: deactivating the touch screen if the stylus is inserted into the electronic device.

4. The method of claim 1 or 3, further comprising: activating the at least one button if the stylus is inserted into the electronic device.

5. The method of one of claims 1 to 4, wherein the at least one button is part of the touch screen.

6. The method of one of claims 1 to 4, wherein the at least one button is separate from the touch screen.

7. The method of one of claims 1 to 6, wherein the deactivating of the at least one button is performed by switching off power to the at least one button.

8. The method of one of claims 1 to 7, wherein the deactivating of the at least one button is performed by ignoring input from the at least one button.

9. The method of claim 3, wherein the deactivating of the touch screen is performed by switching off power to the touch screen.

10. The method of claim 3, wherein the deactivating of the touch screen is performed by ignoring input from the touch screen.

11. A method for controlling an electronic device having an insertable stylus for operating a touch screen of the electronic device, and at least one button for operating the electronic device, the method comprising:
determining whether the stylus is inserted into the electronic device; and
enabling the at least one button if the stylus is inserted into the electronic device.

12. An apparatus comprising:
a removable stylus;
a touch screen which is operable with the stylus;
at least one button for operating the apparatus; and
a controller which determines whether the stylus is removed from the apparatus and disables the at least one button if the stylus is removed from the apparatus.

13. The apparatus of claim 12, wherein the controller enables the touch screen if the stylus is removed from the apparatus, and the controller disables the touch screen if the stylus is inserted into the apparatus.

14. The apparatus of claim 12 or 13, wherein the at least one button is part of the touch screen or separate from the touch screen.

15. The apparatus of one of claims 12 to 14, wherein the controller disables the at least one button by switching off power to the at least one button, or disables the at least one button by ignoring input from the at least one button.
